# FASCICULE DE BREVET EUROPEEN

(11) **EP 2 095 301 B1**
(45) Date de publication et mention de la délivrance du brevet: **09.01.2019**
(21) Numéro de dépôt: 07866466.1
(22) Date de dépôt: 30.10.2007
(51) Int. Cl.: G06K 19/077, A45C 11/18

(54) **CARTES À MICROCIRCUIT POUR ANTENNE DÉPORTÉE ET ANTENNES DÉPORTÉES**
MIKROSCHALTPLATTEN FÜR OFFSET-ANTENNE UND OFFSET-ANTENNEN
MICROCIRCUIT BOARDS FOR OFFSET ANTENNA AND OFFSET ANTENNAS

(30) Priorité: 03.11.2006 FR 0654728
(43) Date de publication de la demande: 02.09.2009
(73) Titulaire: IDEMIA France, 92400 Courbevoie (FR)
(72) Inventeur: ERAY, Yves, 35235 Thorigne Fouillard (FR); VENAMBRE, Jacques, 14123 Ifs (FR)
(74) Mandataire: Santarelli
(86) Numéro de dépôt international: PCT/FR2007/001797
(87) Numéro de publication internationale: WO 2008/059134

(56) Documents cités:
- EP-A- 0 889 444
- EP-A- 1 439 487
- WO-A-2005/104584
- FR-A1- 2 850 189
- FR-A1- 2 864 295

## Description

La présente invention concerne les entités électroniques à microcircuit comprenant une antenne pour des communications sans fil, et plus particulièrement les entités électroniques à microcircuit pour antennes déportées et les antennes déportées.

Les entités électroniques comportant une antenne permettant un fonctionnement à distance en relation avec au moins une autre entité sont de plus en plus fréquemment utilisées. Il existe par exemple des cartes à microcircuit adaptées à interagir sans connexion filaire avec d'autres systèmes électroniques. Certaines de ces entités électroniques sont des systèmes autonomes utilisés pour des fonctions particulières tandis que d'autres sont utilisés comme interface entre deux systèmes électroniques.

Ces entités électroniques peuvent être regroupées en trois catégories distinctes,
- les entités électroniques sans contact (*contactless*) qui possèdent une antenne et un ou plusieurs composants reliés à cette antenne, sans contact externe ;
- les entités électroniques mixtes ou hybrides qui comportent une antenne, des contacts externes et un ou plusieurs composants, pour lesquelles le mode de communication, avec ou sans contact, est lié à l'application visée ; et,
- les entités électroniques à double interface qui comportent une antenne, des contacts externes et un ou plusieurs composants, pour lesquelles les deux modes de communication, avec ou sans contact, peuvent être utilisés simultanément pour une même application.

Typiquement, les cartes sans contact, mixtes ou hybrides ou à double interface sont adaptées à communiquer sans liaison filaire avec une station extérieure. La station extérieure est, de préférence, un lecteur de carte. La communication entre le lecteur de carte et la carte est avantageusement réalisée selon un schéma maître-esclave, c'est-à-dire que le lecteur envoie des commandes et que la carte répond à ces commandes. En variante, la communication peut être initiée par l'entité électronique.

Selon une technologie connue, l'antenne est formée par plusieurs spires conductrices formées au niveau de l'une au moins des couches du support polymère de l'entité électronique, en général au niveau de la couche dénommée '*inlay*' typiquement réalisée en PVC (chlorure de polyvinyle) ou en PET (polyéthylène téréphtalate). Il existe plusieurs méthodes pour réaliser de telles antennes telles que le dépôt d'un fil conducteur, la photogravure, la sérigraphie ou l'impression à base d'encre conductrice. Alternativement, l'antenne peut être formée sur du papier, par exemple pour les passeports, ou sur un support époxy tel qu'un PCB (*Printed Circuit Board*) monté ensuite dans une clé USB ou tout autre entité électronique.

De façon générale, l'antenne est formée sur une surface sensiblement plate et elle est connectée à un microprocesseur comportant typiquement deux bornes de connexion.

La réalisation d'antennes dans ce type d'entités électroniques pose certains problèmes. Tout d'abord, l'encombrement d'une antenne de bonne performance n'est pas réellement compatible avec la taille de certaines de ces entités électroniques. Avec une largeur de pistes typique de 100µm, les pistes étant espacées de 100µm, la taille de l'antenne est supérieure à la surface des mini cartes. Une solution est alors d'utiliser une résolution plus fine, au détriment des coûts de fabrication.

D'autre part, pour certaines applications particulières, l'intégration de l'antenne dans l'entité électronique à microcircuit peut poser des problèmes de transmission de données en raison de la position de l'entité électronique à microcircuit dans l'appareil électronique utilisant cette entité électronique. Par exemple, les cartes à microcircuit utilisées dans les téléphones mobiles sont généralement placées entre le corps du téléphone et la batterie. Ainsi, en raison des perturbations électromagnétiques générées par le corps du téléphone et la batterie, l'émission et la réception de données à partir d'une antenne située dans les cartes à microcircuit utilisées dans les téléphones mobiles sont difficiles à obtenir de façon satisfaisante.

Pour remédier à cet inconvénient, la demande de brevet WO 2005/104584 propose, notamment par référence à la figure 13, d'insérer dans le lecteur de carte une carte sans microcircuit, comportant simplement des contacts, permettant de déplacer la carte SIM (*Subscriber Identity Module*). La carte SIM comportant le microcircuit et l'antenne, reliée à la carte sans microcircuit, est située de l'autre côté de la batterie, de façon à limiter l'influence de la batterie sur l'antenne. Cependant, une telle solution comporte plusieurs inconvénients. Tout d'abord, cette carte SIM est a priori d'épaisseur comparable à celle d'une carte à microcircuit pour téléphone mobile et aussi peu flexible que cette dernière. Il est donc généralement impossible d'installer l'ensemble formé de la carte sans microcircuit, de la carte SIM et de la connexion entre ces deux cartes dans le boîtier d'un téléphone qui n'a pas été prévu pour cela. D'autre part, le procédé de fabrication d'un tel ensemble n'étant pas directement dérivable d'un procédé standard, il semble difficile de fabriquer ces ensembles à un coût raisonnable.

Par ailleurs, la demande de brevet EP 1 439 487 divulgue un dispositif de communication comprenant un microcircuit. Selon un mode de réalisation particulier, une antenne est reliée au microcircuit distant par des conducteurs formés sur la surface d'un support souple, à l'aide d'un connecteur.

L'invention permet de résoudre au moins un des problèmes exposés précédemment.

L'invention a ainsi pour objet un dispositif à microcircuit comprenant un corps sensiblement rigide et au moins un support externe audit corps, ledit corps incorporant au moins un microcircuit et ledit support externe comprenant une antenne, ledit corps comprenant en outre des moyens de couplage sans contact reliés audit au moins un microcircuit, ledit support externe comprenant en outre des moyens de couplage sans contact reliés à ladite antenne, lesdits moyens de couplage sans contact dudit corps et dudit support externe étant adaptés à établir une jonction électrique permettant audit au moins un microcircuit de transmettre ou de recevoir des données par l'intermédiaire de ladite antenne, ledit support externe étant formé d'un film souple apte à permettre le positionnement de l'antenne dans un espace restreint.

Le dispositif selon l'invention permet ainsi de s'affranchir des problèmes d'encombrement liés à la surface du corps du dispositif pour la conception de l'antenne. Ce dispositif peut également être utilisé pour de nouvelles applications dans des appareils pour lesquels un tel dispositif n'a pas été envisagé et un même dispositif selon l'invention peut être utilisé dans des appareils dont les caractéristiques de forme sont différentes. De plus, de par sa conception, ce dispositif peut être fabriqué à partir de certaines étapes des procédés de fabrication standard. Il convient également de noter que l'absence de contact entre le corps et le support externe comprenant l'antenne simplifie le positionnement relatif de l'un par rapport à l'autre.

Dans un mode de réalisation particulier, les moyens de couplage sans contact comprennent avantageusement au moins une piste conductrice adaptée à former un couplage inductif avec ledit au moins un support externe.

Alternativement, les moyens de couplage sans contact comprennent au moins deux pistes conductrices adaptées à former un couplage capacitif.

Les moyens de couplage sans contact dudit corps sont de préférence enfouis dans ledit corps, avantageusement à une distance faible d'une surface dudit corps.

Toujours dans un mode de réalisation particulier, ledit corps comprend en outre des contacts électriques externes, lesdits contacts électriques externes étant reliés électriquement audit au moins un microcircuit. Ledit corps peut être par exemple, une carte à microcircuit hybride ou à double interface telle qu'une carte du type SIM ou une carte équivalente.

Alternativement, ledit corps peut être une carte à microcircuit sans contact ou un boîtier encapsulant ledit au moins un microcircuit.

Toujours dans un mode de réalisation particulier, la surface dudit support externe supportant ladite antenne est supérieure à la surface du corps pour améliorer les performances de l'antenne et simplifier la conception de celle-ci. Cependant, la surface dudit support externe supportant ladite antenne peut être inférieure à la surface du corps si la mise en oeuvre de l'invention a pour principal objet le déport de l'antenne.

Toujours dans un mode de réalisation particulier, la largeur de la partie dudit support externe comprise entre la partie dudit support externe comprenant lesdits moyens de couplage sans contact et la partie dudit support externe supportant ladite antenne est inférieure à la largeur de la partie dudit support externe supportant ladite antenne pour augmenter les possibilités de positionnement de l'antenne et pour simplifier ce positionnement. Ledit support externe est avantageusement formé dans un matériau tel que du nylon ou du PVC. L'épaisseur dudit support externe est de préférence comprise entre 50µm et 150µm.

Dans un mode de réalisation particulier, le dispositif comprend en outre des moyens de positionnement fixés sur au moins l'une des faces dudit support externe, approximativement à l'emplacement dudit support externe supportant ladite antenne pour éloigner l'antenne du support contre lequel est placée l'antenne et pour maintenir l'antenne en place. Ces moyens de positionnement sont avantageusement formés dans un matériau compressible tel qu'une mousse plastique. Ces moyens de positionnement ont de préférence une épaisseur comprise entre 50µm et 150µm. Ces moyens de positionnement sont de préférence également utilisés pour protéger l'antenne.

Toujours dans un mode de réalisation particulier, ledit dispositif comprend une batterie.

D'autres avantages, buts et caractéristiques de la présente invention ressortent de la description détaillée qui suit, faite à titre d'exemple non limitatif, au regard des dessins annexés dans lesquels :
- la figure 1, comprenant les figures 1a et 1b, illustre un premier exemple d'un dispositif comprenant une carte à microcircuit selon l'invention, une antenne formée sur un support externe et des moyens de couplage sans contact entre la carte à microcircuit et le support externe ;
- la figure 2 illustre un premier exemple d'utilisation d'une carte à microcircuit selon l'invention, similaire à celle représentée sur la figure 1, pour une application de téléphonie mobile ;
- la figure 3 illustre un second exemple d'utilisation d'une carte à microcircuit selon l'invention, similaire à celle représentée sur la figure 1, pour une application de téléphonie mobile ;
- les figures 4 et 5 illustrent des exemples des dispositifs de couplages inductif et capacitif, respectivement, adaptés à connecter une entité électronique à une antenne déportée ;
- la figure 6 illustre un exemple de fabrication d'une carte à microcircuit pouvant être utilisée pour mettre en oeuvre l'invention ; et,
- la figure 7 illustre un autre exemple d'entité électronique pouvant être utilisé pour mettre en oeuvre l'invention.

Pour remédier aux inconvénients mentionnés précédemment, le dispositif selon l'invention comprend un corps sensiblement rigide, par exemple en matière plastique, avec un microcircuit, et au moins une piste conductrice adaptée à établir une jonction électrique avec ce microcircuit, par couplage sans contact, avec un moins une autre piste conductrice formée sur un support externe comprenant une antenne connectée à cette au moins une autre piste conductrice, de telle sorte que le microcircuit puisse transmettre ou recevoir des données avec un dispositif externe par l'intermédiaire de l'antenne. Le dispositif selon l'invention comprend également un support sur lequel sont formées une antenne et au moins une piste conductrice adaptée à établir une jonction électrique avec le microcircuit d'une entité électronique, par couplage sans contact, avec un moins une autre piste conductrice formée sur cette entité électronique et reliée à ce microcircuit, de telle sorte que le microcircuit puisse transmettre ou recevoir des données avec un dispositif externe par l'intermédiaire de l'antenne.

Un exemple d'entité électronique adaptée à incorporer un tel dispositif concerne les mini cartes qui regroupent les cartes de surface strictement inférieure au format ID-00, préférentiellement au format ID-000. Il peut s'agir de cartes à puce, c'est-à-dire de cartes à microcircuit conformes à la norme ISO-7816, dont l'épaisseur est d'environ 0,76mm et comportant un microcontrôleur sécurisé.

Il peut également s'agir de cartes conformes à d'autres formats tels que le format MMC (*MultiMedia Card*), le format RS-MMC (*Reduced-Size MultiMedia Card*) ou le format UICC (*Universal Integrated Circuit Card*). L'entité électronique peut également être un boîtier encapsulant un circuit intégré et comportant des pattes de contact, par exemple un boîtier DIP (*Dual In-line Package*).

Préférentiellement, il s'agit d'une carte d'un format destiné à être inséré dans un téléphone mobile ou dans une entité électronique comportant des moyens de communication mobile.

La carte à microcircuit est préférentiellement adaptée à communiquer conformément à la norme ISO14443 à une fréquence d'environ 13,56 Mhz. Il peut s'agir par exemple d'une carte de type dit duale interface, hybride, ou sans contact. En variante, la carte est par exemple adaptée à communiquer sans contact selon la spécification zigbee. Des informations sur cette spécification sont disponibles sur le site www.zigbee.org.

Les figures utilisées pour illustrer le dispositif selon l'invention sont données à titre d'exemples. Il ne doit pas être tenu compte des proportions et des échelles, celles-ci n'ayant pas été respectées afin de mettre en avant les caractéristiques de l'invention au détriment des caractéristiques d'éléments connus en eux-mêmes.

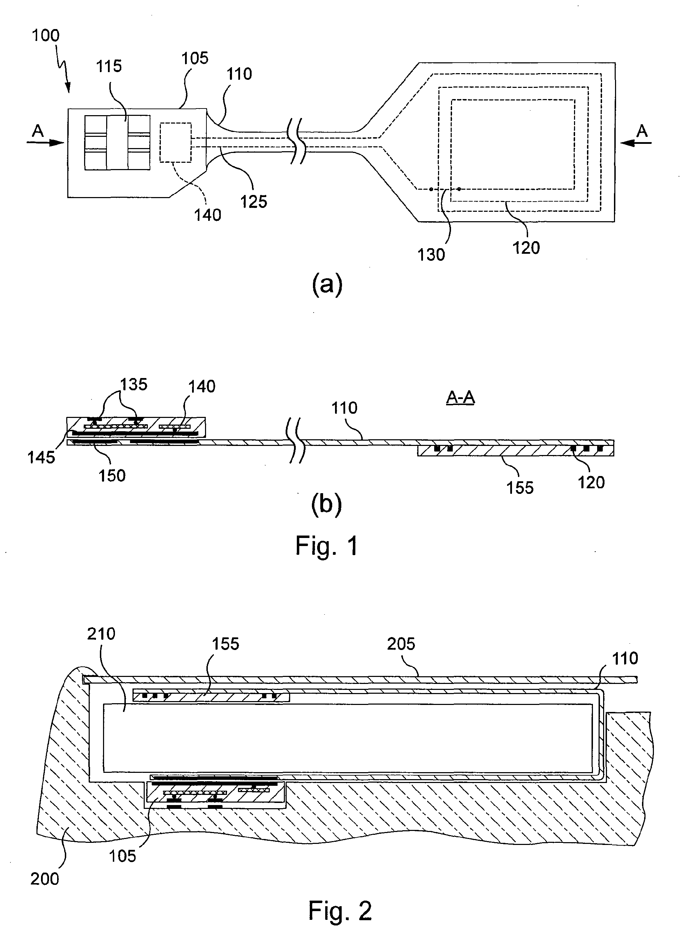

La figure 1, comprenant les figures 1a et 1b, illustre un premier exemple d'un dispositif comprenant une carte à microcircuit selon l'invention, une antenne formée sur un support externe et des moyens de couplage sans contact entre la carte à microcircuit et le support externe. La figure 1a est une vue de dessus du dispositif tandis que la vue 1b est une vue en coupe selon le repère A-A. La carte à microcircuit 105 du dispositif 100 illustré sur la figure 1 est une carte hybride.

La carte 105, sensiblement rigide, est couplée à un film souple 110 sur lequel est formé une antenne 120. Un premier microcircuit 115 est intégré dans la carte 105 pour les applications nécessitant des contacts. Le circuit 115 peut être par exemple un microcircuit de carte SIM. Un second microcircuit 140 est intégré dans la carte 105 pour les applications sans contact. Dans un mode de réalisation particulier, le microcircuit 140 est positionné à côté du circuit 115, du même côté par rapport au film 110.

Le film 110 comprend avantageusement trois parties. Une première partie comprend des moyens de couplage sans contact avec la carte 105 afin d'établir une jonction électrique entre les contacts du microcircuit 140 et l'antenne 120. Une deuxième partie est utilisée pour relier l'antenne aux moyens de couplage sans contact. Elle comprend avantageusement deux pistes conductrices 125 permettant de relier les deux extrémités de l'antenne, formée sur la troisième partie, aux moyens de couplage sans contact formés sur la première partie. L'antenne 120, formée dans la troisième partie, comprend de préférence un ensemble de spires d'une piste conductrice. Selon un mode de réalisation particulier, un pont 130 est formé pour connecter l'extrémité de l'antenne 120 se trouvant à l'intérieur des spires formant l'antenne à l'une des pistes conductrices 125.

Un matériau adhésif est de préférence disposé entre le film 110 et la carte 105 pour maintenir ces deux éléments à proximité l'un de l'autre.

La seconde partie du film, située entre la partie du film comprenant les moyens de couplage sans contact et la partie du film comprenant l'antenne 120 est, de préférence, plus étroite que la carte 105 et que l'antenne 120, favorisant ainsi le positionnement de la carte 105 et de l'antenne 120.

Comme illustré sur la figure 1b, la carte 105 comprend les microcircuits 115 et 140. Le circuit 115 est relié à des connecteurs 135 affleurant la surface de la carte 105, permettant d'établir une jonction électrique avec un lecteur de carte adapté lorsque celle-ci est introduite dans ce lecteur de carte. De même, le microcircuit 140 est relié à des moyens de couplage sans contact 145 intégrés à la carte 105. Les moyens de couplage sans contact 150, disposés dans le film 110 sont de préférence positionnés dans l'alignement des moyens de couplage sans contact 145 de la carte 105, selon une normale à la carte 105.

L'antenne 120 est de préférence protégée par une couche isolante 155, constituée avantageusement d'un matériau compressible tel que de la mousse, formant un dispositif adapté à maintenir par pression l'antenne 120 selon une position prédéfinie. Alternativement, le dispositif adapté à maintenir par pression l'antenne 120 selon une position prédéfinie peut être formé sur l'autre face du film, c'est-à-dire la face ne comportant pas l'antenne, ou sur les deux faces. Ce dispositif peut également permettre d'écarter l'antenne d'une surface particulière telle que la surface d'une batterie.

La surface du film 110 comprenant les pistes conductrices 125, qui n'est pas protégée par la couche isolante 155, est de préférence protégée par une pellicule isolante telle qu'une couche de vernis isolant.

Le film 110 est de préférence réalisé en matière plastique telle que du nylon ou du PVC, c'est-à-dire un matériau souple et résistant. Cependant, le film peut également être en papier ou en caoutchouc. L'épaisseur du film est de préférence comprise entre 50µm et 150µm de telle sorte que le film soit souple et résistant. Dans un mode de réalisation particulier, l'épaisseur du film 110 est égale à environ 80µm.

L'épaisseur de la couche isolante 155 est comprise entre 50µm et 150µm. L'épaisseur de la couche isolante 155 est avantageusement égale à environ 100µm.

Le couplage entre la carte 105 et le film 110 est réalisé par les moyens de couplage sans contact 140 et 145 qui sont, par exemple des moyens de couplage capacitif. Alternativement, les moyens de couplage sans contact 140 et 145 peuvent être des moyens de couplage inductif.

Alors que la figure 1 illustre un exemple de carte hybride, une structure de carte similaire peut être utilisée pour une carte à double interface ou pour tout autre dispositif comprenant des moyens de communication à contact et sans contact.

Parmi les avantages d'une entité électronique telle que celle représentée sur la figure 1, il convient de remarquer que la performance de l'antenne n'est plus directement liée à la surface du corps de la carte. De plus, la faible épaisseur du film permet de mettre en oeuvre une entité électronique selon l'invention pour des applications pour lesquelles l'utilisation de ce type d'entité électronique n'avait pas été prévue. La surface de la partie du film comportant l'antenne est donc avantageusement supérieure à celle du corps de la carte. Cependant, la surface de la partie du film comportant l'antenne peut naturellement être inférieure à celle du corps de la carte, en particulier en ce qui concerne des applications pour lesquelles il est nécessaire de déporter l'antenne sans améliorer ses qualités.

Le film souple présente en outre l'avantage de pouvoir s'adapter facilement à des topographies très différentes, afin notamment de positionner une antenne dans des espaces restreints.

La figure 2 illustre un premier exemple d'utilisation d'une carte à microcircuit selon l'invention, similaire à celle représentée sur la figure 1, pour une application de téléphonie mobile. Le corps 200 du téléphone comprend une double cavité adaptée à recevoir une carte à microcircuit, par exemple une carte SIM standard, et une batterie 210. La double cavité est protégée par un capot 205. La partie de la cavité adaptée à recevoir une carte à microcircuit comprend de préférence des connecteurs de telle sorte que lorsque la carte à microcircuit est en place, il y ait une connexion électrique entre le téléphone et la carte à microcircuit. La carte à microcircuit peut être maintenue par un système de verrouillage standard (non représenté). Ainsi, lorsque la carte à microcircuit 105 selon l'invention est mise en place dans la cavité, une connexion électrique est réalisée entre le téléphone et le microcircuit 115. Le film 110 est de préférence positionné le long de la batterie 210 de telle sorte que l'antenne 120 soit disposée entre la batterie 210 et le capot 205, comme illustré.

Le positionnement de l'antenne 120 entre la batterie 210 et le capot 205 permet au microcircuit 140 d'échanger des données, sans contact, avec un émetteur/récepteur adapté, en limitant les effets parasitiques liés au corps 200 du téléphone et à la batterie 210.

En raison de la faible épaisseur et de la souplesse du film 110, la carte à microcircuit comportant une antenne déportée peut être insérée et utilisée dans un téléphone mobile qui n'a pas été conçu pour recevoir un tel dispositif.

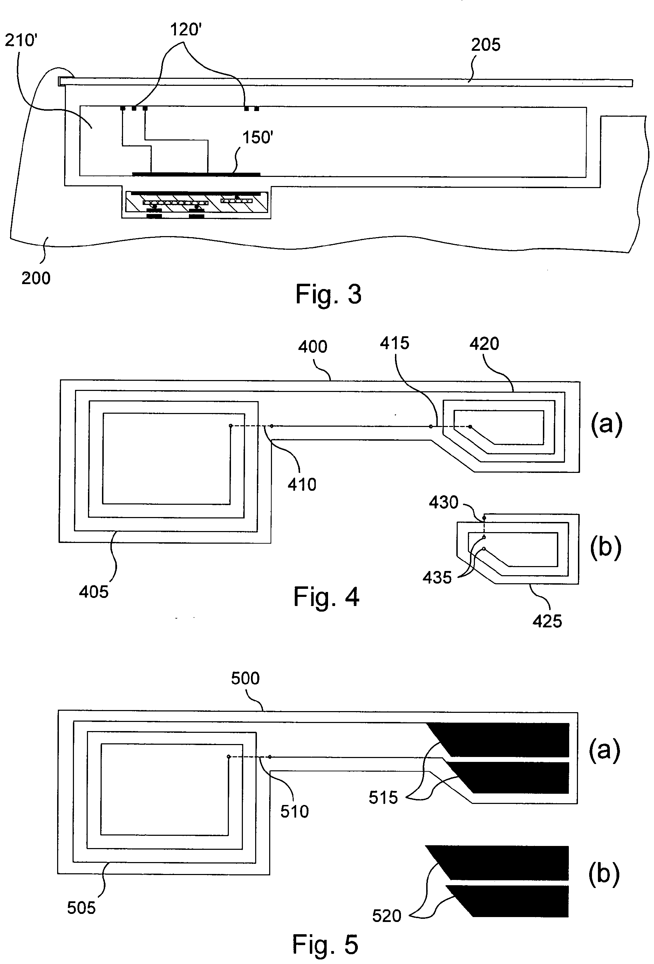

La figure 3 illustre un second exemple d'utilisation d'une carte à microcircuit selon l'invention, similaire à celle représentée sur la figure 1, pour une application de téléphonie mobile. Le corps 200 du téléphone, identique à celui présenté sur la figure 2, comprend une double cavité adaptée à recevoir une carte à microcircuit, par exemple une carte SIM standard, et une batterie 210'. La double cavité est protégée par le capot 205. La partie de la cavité adaptée à recevoir une carte à microcircuit comprend de préférence des connecteurs de telle sorte que lorsque la carte à microcircuit est en place, il y ait une connexion électrique entre le téléphone et la carte à microcircuit. La carte à microcircuit peut être maintenue par un système de verrouillage standard (non représenté). Ainsi, lorsque la carte à microcircuit 105 selon l'invention est mise en place dans la cavité, une connexion électrique est réalisée entre le téléphone et le microcircuit 115.

La batterie 210' comprend une antenne 120' positionnée, de préférence, sur sa face supérieure, des moyens de couplage sans contact 150' disposés en regard de la cavité adaptée à recevoir la carte à microcircuit, lorsque la batterie est en place, et des pistes conductrices disposées pour relier les extrémités de l'antenne 120' aux moyens de couplage sans contact 150'. Lorsque la carte à microcircuit et la batterie sont placées dans le corps 200 du téléphone mobile, les moyens de couplage sans contact 145 de la carte à microcircuit et les moyens de couplage sans contact 150' de la batterie permettent l'établissement d'une jonction électrique entre l'antenne 120' et le microcircuit 140. Il convient de noter que dans ce mode de réalisation, les moyens de couplage sans contact 145 peuvent être placés à la surface de la carte car les moyens de couplage sans contact 145 et 150' ne sont pas en contact du fait de l'espace compris entre la batterie et la carte à microcircuit. A nouveau, les moyens de couplages sans contact 145 et 150' peuvent être des moyens de couplage capacitif ou inductif.

Les figures 4 et 5 illustrent des exemples des dispositifs de couplages inductif et capacitif, respectivement, adaptés à établir une connexion entre une entité électronique et une antenne déportée.

La figure 4a représente un film 400 comprenant une antenne 405 connectée à une boucle d'induction 420 par l'intermédiaire, notamment, des ponts 410 et 415. La figure 4b représente une boucle d'induction 425, formée dans une entité électronique, dont les extrémités sont reliées à des contacts 435, notamment par l'intermédiaire du pont 430. Les contacts 435 sont de préférence reliés à un microcircuit pour les applications sans contact. Lorsque les boucles 420 et 425 sont disposées à proximité et en regard l'une de l'autre, elles forment un couplage inductif permettant la transmission des signaux de l'antenne 405 vers un microcircuit relié aux contacts 435 et inversement.

De façon similaire, la figure 5a représente un film 500 comprenant une antenne 505 connectée aux pistes conductrices 515 par l'intermédiaire, notamment, du pont 410. La figure 5b représente des pistes conductrices 520, formées dans une entité électronique, dont les extrémités sont reliées à des contacts qui sont de préférence reliés à un microcircuit pour des applications sans contact. Lorsque les pistes conductrices 515 et 520 sont disposées à proximité et en regard l'une de l'autre, elles forment un couplage capacitif permettant la transmission des signaux de l'antenne 505 vers un microcircuit relié aux pistes conductrices 520 et inversement.

Les pistes conductrices 425 et 520 sont de préférence enfouies dans le corps de l'entité électronique à microcircuit, de préférence sensiblement proche de la surface de l'entité électronique qui est en regard des moyens de couplage sans contact du support externe comprenant l'antenne. Cette caractéristique a pour avantage de protéger les pistes conductrices 425 et 520 et éventuellement de les cacher pour ne pas changer l'aspect extérieur de la carte à microcircuit. Cette caractéristique a également pour avantage de simplifier la fabrication de la carte à microcircuit.

L'antenne et les moyens de couplage sans contact du support externe peuvent être réalisés selon des technologies connues telles que le dépôt d'un fil conducteur, la photogravure, la sérigraphie ou l'impression à base d'encre conductrice. Le support externe en lui-même peut être constitué d'un film, de préférence un film souple et résistant tel qu'un film en nylon ou en PVC, ou d'une partie de l'objet dans lequel doit être inséré le dispositif à microcircuit selon l'invention, par exemple, une batterie ou un capot de protection.

L'entité à microcircuit peut être réalisée selon des méthodes standard. En particulier, l'entité à microcircuit peut être fabriquée selon le procédé décrit dans la demande de brevet FR 2 864 295 dans lequel la piste conductrice formant l'antenne de la carte à microcircuit est remplacée par des pistes conductrices utilisées pour former le couplage de l'entité à microcircuit avec le support externe comprenant l'antenne.

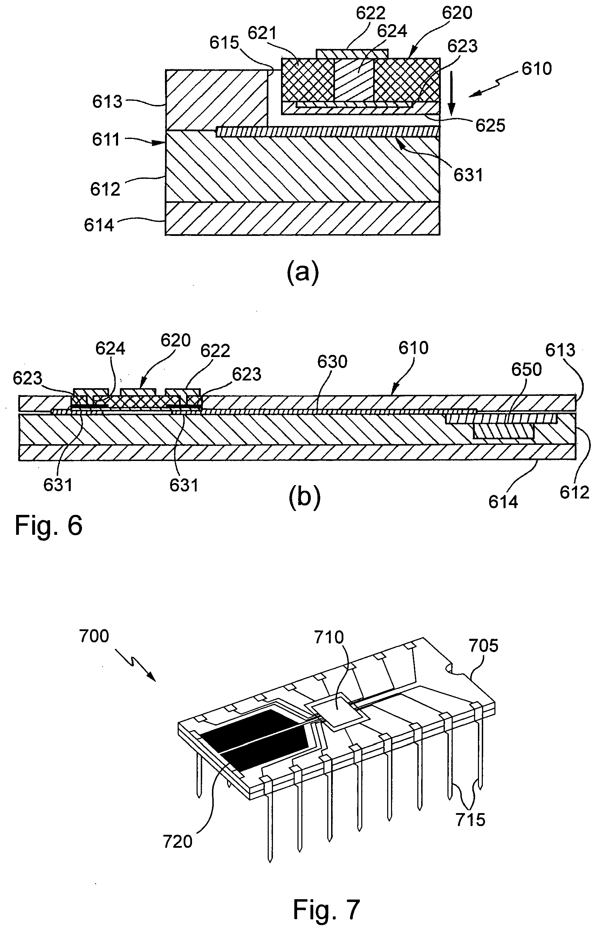

La figure 6, comprenant les figures 6a et 6b, représente une carte à microcircuit réalisée selon le procédé décrit dans la demande de brevet citée précédemment. La figure 6a représente une partie d'une carte à microcircuit 610, comportant un corps de carte 611 comportant une couche centrale 612, ou inlay, entre deux couches 613 et 614, une cavité 615 dans la couche supérieure 613 de ce corps et, sur le point d'être fixée dans cette cavité, une vignette 620 constituée d'un support 621, par exemple formée d'un verre époxy de 100µm d'épaisseur, comportant, sur une face supérieure, un réseau de pistes conductrices en cuivre formant des contacts externes 622 dont la configuration est conforme à une norme ISO s'appliquant à des cartes à microcircuits à contacts externes, telle que la norme ISO 7816 et, sur une face inférieure, des contacts internes 623 connectés électriquement aux contacts externes, respectivement, par des traversées conductrices 624, aussi appelées *vias* ou trous métallisés.

A l'interface entre la couche centrale 612 et la couche supérieure 613 sont schématisées, avec une épaisseur exagérée pour des raisons de lisibilité du dessin, des lignes conductrices 630 (voir la figure 6b) connectées à un composant non représenté (à la droite de cette figure 6a) et s'étendant jusqu'à des extrémités (à gauche) formant des bornes de connexion 631. Dans la couche supérieure 613 est aménagée, jusqu'au niveau de la face supérieure de la couche supérieure, donc jusqu'au niveau de ces lignes conductrices 630, une cavité 615 dans laquelle la vignette 620 peut être fixée.

Une couche d'adhésif anisotrope 625, propre à assurer une bonne liaison mécanique ainsi qu'une connexion électrique, principalement selon une direction donnée, est ici collée sur la face inférieure de ce support, ou arrière, en recouvrant notamment ces contacts internes.

La flèche verticale dirigée vers le bas symbolise le mouvement de mise en place de la vignette dans la cavité.

La figure 6b représente l'ensemble de la carte ainsi réalisée. La figure 6b montre en particulier la vignette 620 après assemblage dans cette carte.

La couche centrale comporte en outre des pistes conductrices en cuivre utilisées pour le couplage de la carte à microcircuit avec un support extérieur comprenant une antenne destinée à permettre un échange avec l'extérieur par radio-fréquence. Ces pistes conductrices de couplage sont avantageusement réalisées de la même manière, et en même temps que ces lignes conductrices. Ces pistes conductrices de couplage sont, par exemple, celles représentées sur les figures 4b et 5b.

La réactivation de l'adhésif anisotrope pendant l'encartage, c'est-à-dire pendant l'opération de fixation de la vignette dans la cavité, permet le collage de la vignette dans le fond de la cavité et la liaison électrique avec les pistes de l'inlay.

La liaison électrique entre les contacts externes et le composant 650 situé à droite est donc assurée par les lignes conductrices de l'inlay, la couche d'adhésif 623, les contacts internes et les traversées métallisées. On peut noter que, dans l'exemple représenté, le composant assemblé en module (*flip chip*) est inséré dans l'épaisseur de cet inlay.

Les borne de connexion 631 représentées à la face supérieure de la couche centrale, au fond de la cavité sont décomposées en deux parties pour symboliser qu'il y a des bornes de connexion distinctes, en principe pour chaque contact interne.

Lors d'une étape préliminaire, on réalise un inlay 612, sur lequel on réalise au moins un composant 650, ici un microprocesseur, connecté aux lignes conductrices 630, qui aboutissent aux bornes de connexion 631. Sur cet inlay sont en outre réalisées les pistes conductrices de couplage.

De manière préférée, le microprocesseur 650 est connecté à la fois aux lignes conductrices 630 et aux pistes conductrices de couplage.

L'inlay 612 est ensuite, lors d'une deuxième étape, laminé entre les deux couches, en pratique en matière plastique (de manière connue en soi dans le domaine des cartes à microcircuit) ce qui donne une carte à microcircuit qui peut être utilisée dans une application ne faisant intervenir d'échanges avec l'extérieur que par la voie radio-fréquence. Au terme de cette deuxième étape, on dispose donc déjà d'une carte à microcircuit opérationnelle.

En variante, le composant 650 n'est pas connecté aux pistes conductrices de couplage, ce qui correspond à une carte du type hybride.

Dans ce qui précède, l'inlay est complètement individualisé, ce qui n'empêche pas qu'il soit, en pratique, fabriqué par un procédé de fabrication collective d'un réseau de tels inlays au sein d'une plaque de grandes dimensions.

Lors de la troisième étape, on creuse la couche supérieure 613 en sorte d'obtenir la cavité 615 qui s'étend jusqu'au niveau des lignes conductrices et des pistes conductrices de couplage réalisées sur l'inlay 612.

En parallèle, on réalise la vignette 620, dont la géométrie est en principe déterminée conjointement avec celle de la cavité en sorte d'occuper la quasi-totalité du volume de cette cavité par cette vignette.

Une quatrième étape consiste à encarter la vignette 620 dans la cavité du corps de carte, ce qui donne une carte finie.

La carte représentée est au format carte de crédit, à savoir au format ID-1. Bien entendu, ce qui précède vaut aussi pour des cartes à un quelconque autre format, en particulier au format ID-000 des cartes SIM.

Par ailleurs, la connexion entre les contacts internes et les bornes de connexion peut également être réalisée, notamment, par :
- des colles conductrices à basse température de polymérisation
- par refusion de billes métalliques à base d'alliage de plomb, étain, indium permettant un contact électrique après une refusion à basse température.

De même, la partie conductrice de l'inlay (pistes conductrices de couplage et lignes conductrices avec les bornes de connexion) peut être fabriquée, notamment :
- à partir de pistes sérigraphiées (encres conductrices),
- à partir de pistes faites en héliogravure (procédé additif, avec impression d'encres conductrices et croissance électrolytique de cuivre),
- au moyen de fils de cuivre.

Il est à noter que toutes les combinaisons des différents procédés de réalisation de ces pistes ne sont pas toutes compatibles avec les différents moyens de liaisons décrits ci-dessus, mais il est à la portée de l'homme de métier de faire un choix réaliste.

La figure 7 illustre un autre type d'entités électroniques pouvant être utilisé pour mettre en oeuvre l'invention. L'entité électronique (700) représentée sur la figure 7 comprend un boîtier (705), formant le corps de l'entité électronique, qui encapsule un circuit intégré (710) connecté à des pattes de contact (715). L'entité électronique 700 comprend en outre des moyens de couplage capacitif (720) adaptés à coopérer avec des moyens de couplage capacitif équivalent disposés sur un support comprenant une antenne, tels que ceux présentés sur la figure 5a. Les moyens de couplage capacitif 720 sont avantageusement reliés à deux contacts du circuit intégré 710. Ainsi, lorsqu'un support comprenant une antenne et des moyens de couplage capacitif tel que celui présenté sur la figure 1 et disposé de telle façon que les moyens de couplage capacitif de ce support et du boîtier 705 coopèrent, le circuit intégré 710 peut recevoir et émettre des données par l'intermédiaire de l'antenne du support. Il doit bien sûr être compris que les moyens de couplage capacitif 720 peuvent être remplacés par des moyens de couplage inductif. Il convient de noter que dans un souci de clarté, la couche supérieure de l'entité électronique 700 n'est pas représentée pour illustrer le circuit intégré 710, ses connexions ainsi que les pistes conductrices formant les moyens de couplage sans contact. La couche supérieure a pour principal objet de protéger le circuit intégré et les pistes conductrices dont les moyens de couplage sans contact.

## Revendications

1. Dispositif à microcircuit comprenant un corps (105, 705) sensiblement rigide et au moins un support (110) externe audit corps, ledit corps incorporant au moins un microcircuit (140, 710) et ledit support externe comprenant une antenne (120), ledit corps comprenant en outre des moyens de couplage sans contact (145, 720) reliés audit au moins un microcircuit, ledit support externe comprenant en outre des moyens de couplage sans contact (150) reliés à ladite antenne, lesdits moyens de couplage sans contact dudit corps et dudit support externe étant configurés pour établir une jonction électrique permettant audit au moins un microcircuit de transmettre ou de recevoir des données par l'intermédiaire de ladite antenne, le dispositif étant **caractérisé en ce que** ledit support externe est formé d'un film souple apte à permettre le positionnement de l'antenne dans un espace restreint.

2. Dispositif selon la revendication 1 **caractérisé en ce que** chacun desdits moyens de couplage sans contact dudit corps et dudit support externe comprennent au moins une piste conductrice (420, 425) adaptée à former un couplage inductif.

3. Dispositif selon la revendication 1 **caractérisé en ce que** chacun desdits moyens de couplage sans contact dudit corps et dudit support externe comprennent au moins deux pistes conductrices (515, 520) adaptées à former un couplage capacitif.

4. Dispositif selon l'une quelconque des revendications 2 et 3 **caractérisé en ce que** lesdites pistes desdits moyens de couplage sans contact dudit corps sont enfouies dans ledit corps.

5. Dispositif selon la revendication 4 **caractérisé en ce que** les lesdites pistes desdits moyens de couplage sans contact dudit corps sont enfouies dans ledit corps à une distance faible d'une surface dudit corps.

6. Dispositif selon l'une quelconque des revendications précédentes **caractérisé en ce que** ledit corps comprend en outre des contacts électriques externes (135), lesdits contacts électriques externes étant reliés électriquement audit au moins un microcircuit.

7. Dispositif selon l'une quelconque des revendications précédentes **caractérisé en ce que** ledit corps est une carte à microcircuit hybride ou à double interface.

8. Dispositif selon l'une quelconque des revendications précédentes **caractérisé en ce que** ledit corps est une carte du type SIM ou une carte équivalente.

9. Dispositif selon l'une quelconque des revendications précédentes selon lequel la surface dudit support externe supportant ladite antenne est supérieure à la surface dudit corps.

10. Dispositif selon l'une quelconque des revendications précédentes comprenant en outre des moyens de positionnement fixés sur au moins l'une des faces dudit support externe, approximativement à l'emplacement dudit support externe supportant ladite antenne.

11. Dispositif selon la revendication 10 selon lequel lesdits moyens de positionnement sont formés dans un matériau compressible.

## Patentansprüche

1. Mikroschaltungsvorrichtung, welche einen im Wesentlichen starren Körper (105, 705) und wenigstens einen außerhalb des Körpers befindlichen Träger (110) umfasst, wobei in den Körper wenigstens eine Mikroschaltung (140, 710) integriert ist und der äußere Träger eine Antenne (120) umfasst, wobei der Körper außerdem kontaktlose Kopplungsmittel (145, 720) umfasst, die mit der wenigstens einen Mikroschaltung verbunden sind, wobei der äußere Träger außerdem kontaktlose Kopplungsmittel (150) umfasst, die mit der Antenne verbunden sind, wobei die kontaktlosen Kopplungsmittel des Körpers und des äußeren Trägers dafür ausgebildet sind, eine elektrische Verbindung herzustellen, die der wenigstens einen Mikroschaltung ermöglicht, Daten über die Antenne zu senden oder zu empfangen, wobei die Vorrichtung **dadurch gekennzeichnet ist, dass** der äußere Träger von einer flexiblen Folie gebildet wird, die geeignet ist, die Positionierung der Antenne in einem beschränkten Raum zu ermöglichen.

2. Vorrichtung nach Anspruch 1, **dadurch gekennzeichnet, dass** jedes der kontaktlosen Kopplungsmittel des Körpers und des äußeren Trägers wenigstens eine Leiterbahn (420, 425) umfasst, die dafür ausgelegt ist, eine induktive Kopplung zu bewirken.

3. Vorrichtung nach Anspruch 1, **dadurch gekennzeichnet, dass** jedes der kontaktlosen Kopplungsmittel des Körpers und des äußeren Trägers wenigstens zwei Leiterbahnen (515, 520) umfasst, die dafür ausgelegt sind, eine kapazitive Kopplung zu bewirken.

4. Vorrichtung nach einem der Ansprüche 2 und 3, **dadurch gekennzeichnet, dass** die Leiterbahnen der kontaktlosen Kopplungsmittel des Körpers in den Körper eingebettet sind.

5. Vorrichtung nach Anspruch 4, **dadurch gekennzeichnet, dass** die Leiterbahnen der kontaktlosen Kopplungsmittel des Körpers in einem geringen Abstand von einer Oberfläche des Körpers in den Körper eingebettet sind.

6. Vorrichtung nach einem der vorhergehenden Ansprüche, **dadurch gekennzeichnet, dass** der Körper außerdem äußere elektrische Kontakte (135) umfasst, wobei die äußeren elektrischen Kontakte mit der wenigstens einen Mikroschaltung elektrisch verbunden sind.

7. Vorrichtung nach einem der vorhergehenden Ansprüche, **dadurch gekennzeichnet, dass** der Körper eine hybride Mikroschaltungskarte oder eine Mikroschaltungskarte mit doppelter Schnittstelle ist.

8. Vorrichtung nach einem der vorhergehenden Ansprüche, **dadurch gekennzeichnet, dass** der Körper eine Karte vom Typ einer SIM-Karte oder äquivalenten Karte ist.

9. Vorrichtung nach einem der vorhergehenden Ansprüche, wobei die Fläche des äußeren Trägers, der die Antenne trägt, größer als die Fläche des Trägers ist.

10. Vorrichtung nach einem der vorhergehenden Ansprüche, welche außerdem Positionierungsmittel umfasst, die auf wenigstens einer der Seiten des äußeren Trägers befestigt sind, ungefähr an der Stelle des äußeren Trägers, welche die Antenne trägt.

11. Vorrichtung nach Anspruch 10, wobei die Positionierungsmittel aus einem zusammendrückbaren Material ausgebildet sind.

## Claims

1. Microcircuit device comprising a substantially rigid body (105, 705) and at least one support (110) external to said body, said body incorporating at least one microcircuit (140, 710) and said external support comprising an antenna (120), said body further comprising contactless coupling means (145, 720) connected to said at least one microcircuit, said external support further comprising contactless coupling means (150) connected to said antenna, said contactless coupling means of said body and of said external support being configured so as to establish an electrical connection allowing said at least one microcircuit to transmit or to receive data by way of said antenna, the device being **characterized in that** said external support is formed of a flexible film enabling the antenna to be positioned in a restricted space.

2. Device according to Claim 1, **characterized in that** each of said contactless coupling means of said body and of said external support comprise at least one conductive track (420, 425) designed to form an inductive coupling.

3. Device according to Claim 1, **characterized in that** each of said contactless coupling means of said body and of said external support comprise at least two conductive tracks (515, 520) designed to form a capacitive coupling.

4. Device according to either one of Claims 2 and 3, **characterized in that** said tracks of said contactless coupling means of said body are embedded in said body.

5. Device according to Claim 4, **characterized in that** said tracks of said contactless coupling means of said body are embedded in said body at a small distance from a surface of said body.

6. Device according to any one of the preceding claims, **characterized in that** said body further comprises external electrical contacts (135), said external electrical contacts being electrically connected to said at least one microcircuit.

7. Device according to any one of the preceding claims, **characterized in that** said body is a hybrid or dual-interface microcircuit card.

8. Device according to any one of the preceding claims, **characterized in that** said body is a SIM card or an equivalent card.

9. Device according to any one of the preceding claims, wherein the surface of said external support supporting said antenna is larger than the surface of said body.

10. Device according to any one of the preceding claims, further comprising positioning means attached to at least one of the faces of said external support, approximately at the location of said external support supporting said antenna.

11. Device according to Claim 10, wherein said positioning means are formed from a compressible material.
